# EUROPEAN PATENT SPECIFICATION

(11) **EP 2 521 322 B1**
(45) Date of publication and mention of the grant of the patent: **03.08.2016**
(21) Application number: 10840424.5
(22) Date of filing: 29.09.2010
(51) Int. Cl.: H04L 12/70, H04L 12/413, H04L 12/46, H04L 12/721

(54) **METHOD AND APPARATUS FOR REALIZING TIME DIVISION MULTIPLEX DATA TRANSMISSION**
VERFAHREN UND VORRICHTUNG ZUR IMPLEMENTIERUNG DER ÜBERTRAGUNG VON ZEITMULTIPLEXDATEN
PROCÉDÉ ET APPAREIL DESTINÉS À METTRE EN UVRE UNE TRANSMISSION DE DONNÉES AVEC MULTIPLEXAGE PAR RÉPARTITION DANS LE TEMPS

(30) Priority: 31.12.2009 CN 200910265789
(43) Date of publication of application: 07.11.2012
(73) Proprietor: ZTE Corporation, Shenzhen, Guangdong 518057 (CN)
(72) Inventor: LI, Xiang, Guangdong 518057 (CN); SHEN, Yaling, Guangdong 518057 (CN)
(74) Representative: Mozzi, Matteo
(86) International application number: PCT/CN2010/077469
(87) International publication number: WO 2011/079635

(56) References cited:
- EP-A1- 1 585 259
- EP-A1- 1 744 479
- EP-A2- 1 560 386
- CN-A- 1 972 247
- CN-A- 101 778 040
- US-A1- 2008 304 476
- US-A1- 2009 279 424
- LV HUAMING ET AL.: 'Research and realization of MPLS tunnel carrying emulation service based on Pseudo-Wire Emulation Edge-to-Edge protocol' THESIS OF MASTER OF NORTHWESTERN POLYTECHNICAL UNIVERSITY December 2006, pages 5,7 - 8,13,18,43,47,49-50, XP008169014
- LI CHAOJU ET AL.: 'Pseudo-Wire Emulation Edge-to-Edge (PWE3): 1.framework' CHINA DATA COMMUNICATIONS no. 5, May 2003, page 90, XP008077544

## Description

### Field of the Invention

The present invention relates to Pseudo Wire Emulation Edge-to-Edge (PWE3) technology in communication field, and in particular to a method and an apparatus for realizing Time Division Multiplex (TDM) data transmission based on the PWE3.

### Background of the Invention

The Ethernet, which is characterized by good openness, wide application, low cost etc., has gradually monopolized the information management and communication of the upper layer in the communication field and process control field, but a series of existing services based on the circuit of traditional operators, such as, TDM, Asynchronous Transfer Mode (ATM), and Frame Relay (FR) etc., still have a very high use value, and users still need these services to support their service requirements. Therefore, the simplest solution is to integrate the Internet Protocol (IP) into the Ethernet. Due to the proposition of the PWE3 technology, the existing valuable services above of the operators can be transferred to a converged backbone network, such as an IP network or a Multi Protocol Label Switching (MPLS) network, thereby meeting the requirement of a novel IP-based Ethernet.

The PWE3 technology is a mechanism for simulating various point-to-point services, such as a TDM network, an ATM network, an FR network or an Ethernet and other networks, on a Packet Switched Network (PSN). The PWE3 technology simulates the required attributes of a service by using a tunnel mechanism on the PSN, wherein the tunnel is called a Pseudo Wire (PW). The operators can transfer all the transport services to a converged network, such as an IP network or an MPLS network etc., by using the PWE3 technology, and from the point of the users, what the PWE3 technology simulates can be deemed as a dedicated link or circuit.

However, the conventional PWE3 system cannot realize the function of TDM data transmission, that is to say, a TDM service cannot be simulated on the PSN in the conventional PWE3 system.

The European Patent Application EP 1 560 386 A2 provides a method for transmitting and receiving ethernet data in system based on broadcast/communication convergence, and discloses a related broadcast/communication convergence system.

In particular, EP 1 560 386 A2 provides a solution wherein Encapsulated Ethernet data are transmitted to a subscriber set-top box.

### Summary of the Invention

In view of this, a method and an apparatus for realizing TDM data transmission are provided by the present invention, so as to achieve the objective of simulating the TDM service on the PSN.

In order to achieve the above objective, the technical solution of the present invention is implemented as follows.

The present invention provides a method for realizing TDM data transmission, wherein the method comprises:
converting TDM data of a physical layer transmitted by a local user into data of a link layer, judging formats of the data of the link layer, and performing corresponding pre-processing on the data of the link layer in different formats; performing Pseudo Wire (PW) encapsulation on pre-processed data in different formats, adding a PW label, and then transmitting an obtained data packet to an opposite Provider Edge (PE); and
removing an outer PW label of a PW data packet transmitted by the opposite PE, then judging formats of data in the PW data packet, and performing corresponding de-encapsulation on the PW data packet according to different data formats; and converting the data in different formats obtained by the de-encapsulation into corresponding data of the link layer, then converting the data of the link layer into the TDM data of the physical layer and transmitting the TDM data of the physical layer to the local user.
the formats of the data of the link layer obtained by the conversion comprise: ordinary TDM data, Packet over SONET/SDH (POS)-based Point-to-Point Protocol (PPP)/High Level Data Link Control (HDLC) data or an Asynchronous Transmission Mode (ATM) cell based on Inverse Multiplexing for ATM (IMA).
when the data of the link layer obtained by the conversion is the POS-based PPP/HDLC data,
the step of performing the corresponding pre-processing on the data of the link layer in different formats correspondingly comprises: removing a HDLC frame format of the data to obtain a PPP message.
when the data of the link layer obtained by the conversion is the ATM cell based on IMA,
the step of performing the corresponding pre-processing on the data of the link layer in different formats correspondingly comprises: performing processing of a Transmission Convergence (TC) layer of the ATM cell to realize functions of cell header verification, payload scrambling.

The step of performing the PW encapsulation on the pre-processed data in different formats comprises:
intercepting the PPP message, taking out an Internal Protocol (IP) packet in the PPP message, and performing the PW encapsulation on the IP packet; or
directly performing the PW encapsulation on the PPP message.

The step of performing the PW encapsulation on the pre-processed data in different formats comprises:
performing cell cascading and Virtual Circuit (VC) translation on the pre-processed data, and then performing the PW encapsulation.

In the solution, when the data of the link layer obtained by the conversion is the ordinary TDM data,
the step of performing the corresponding pre-processing on the data of the link layer in different formats and then performing the PW encapsulation on the pre-processed data in different formats correspondingly comprises: directly performing the PW encapsulation on the TDM data.

The present invention further provides an apparatus for realizing TDM data transmission, which comprises: a physical layer processing module, a data conversion module, an encapsulation and de-encapsulation module, and a switching module, wherein
the physical layer processing module is configured to convert TDM data of a physical layer transmitted by a local user into data of a link layer, and transmit the data of the link layer to the data conversion module during an uplink process, and the physical layer processing module is further configured to convert the data of the link layer transmitted by the data conversion module into the TDM data of the physical layer, and transmit the TDM data of the physical layer to the local user during a downlink process;
the data conversion module is configured to judge formats of the data of the link layer transmitted by the physical layer processing module, perform corresponding pre-processing on the data of the link layer in different formats, and transmit obtained data to the encapsulation and de-encapsulation module during the uplink process, and the data conversion module is further configured to convert the data in different formats obtained by the de-encapsulation transmitted by the encapsulation and de-encapsulation module into corresponding data of the link layer, and transmit the data of the link layer to the physical layer processing module during the downlink process;
the encapsulation and de-encapsulation module is configured to perform PW encapsulation on pre-processed data in different formats transmitted by the data conversion module, and transmit a PW data packet to the switching module during the uplink process, and the encapsulation and de-encapsulation module is further configured to judge formats of data in a PW data packet transmitted by the switching module, perform corresponding de-encapsulation on the PW data packet according to different data formats, and transmit the data obtained by the de-encapsulation to the data conversion module during the downlink process; and
the switching module is configured to add a PW label to the PW data packet transmitted by the encapsulation and de-encapsulation module, and transmit obtained PW data packet to an opposite PE during the uplink process, and the switching module is further configured to remove an outer PW label of a PW data packet transmitted by the opposite PE, and transmit the data packet whose PW label has been removed to the encapsulation and de-encapsulation module during the downlink process.

The formats of the data of the link layer obtained by the conversion comprise: ordinary TDM data, POS-based PPP/HDLC data or an ATM cell based on IMA.

The method and apparatus for realizing the TDM data transmission provided by the present invention comprise: converting the TDM data of a physical layer transmitted by a local user into the data of a link layer, judging the formats of the data of the link layer, and performing corresponding pre-processing on the data of the link layer in different formats; performing PW encapsulation on the pre-processed data in different formats, adding a PW label, and then transmitting the obtained data packet to the opposite PE; removing the outer PW label of the PW data packet transmitted by the opposite PE, then judging the formats of the data in the PW data packet, and performing corresponding de-encapsulation on the PW data packet according to different data formats; and converting the data in different formats obtained by the de-encapsulation into corresponding data of the link layer, and then converting the data of the link layer into the TDM data of the physical layer and transmitting the TDM data of the physical layer to the local user. The present invention achieves the objective of simulating the TDM service on the PSN by using the PW encapsulation technology, PW data message transmission technology, and other technologies in the PWE3, so as to further perfect functions of the conventional PWE3 system.

### Brief Description of the Drawings

Fig. 1 is a schematic structural diagram of a reference model for the service of the PWE3 technology on a PSN;
Fig. 2 is a flow chart of forwarding uplink data in a method for realizing TDM data transmission of the present invention;
Fig. 3 is a flow chart of forwarding downlink data in a method for realizing TDM data transmission of the present invention; and
Fig. 4 is a schematic structural diagram of an apparatus for realizing TDM data transmission of the present invention.

### Detailed Description of Embodiments

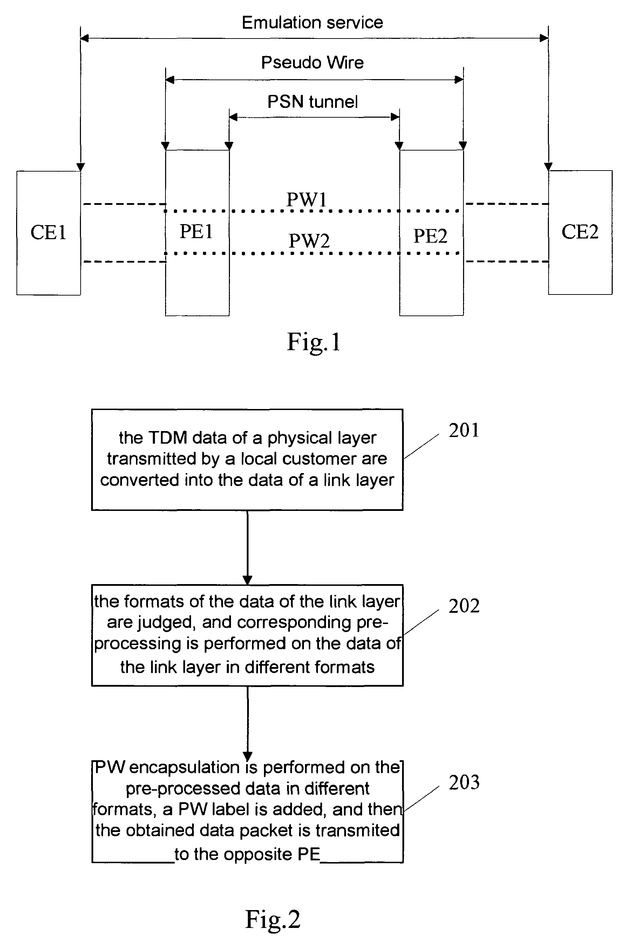

The reference model of the PWE3 service is as shown in Fig. 1, wherein PE1 and PE2 are provider edges, CE1 and CE2 are customer edges, one or more PWs are created between PE1 and PE2, i.e., the PWE3 channel; an access link, which may be either an Ethernet or an non-Ethernet, such as a TDM network etc., is between a CE and a PE; CE1 and CE2 communicate with each other through the PW after respectively accessing PE1 and PE2; and the PW is born on the PSN tunnel which determines the forwarding path of the data. When CE1 and CE2 communicate with each other, the user data of CE1 is transmitted to PE1, and then encapsulated by the PW label to form a data message. The data message is transmitted to PE2 through a path created by the PW, PE2 decapsulates the received data message to remove the PW label, and transmits the user data obtained by the de-encapsulation to CE2. The basic principle of the model shown in Fig. 1 is universally applicable in the actual application process, and the model has different specific application modes for different service requirements.

Corresponding to the PE shown in Fig. 1, the apparatus of the present invention is configured to transmit the data uploaded by the local CE to the opposite PE and transmit the data transmitted by the opposite PE to the local CE.

The basic idea of the present invention comprises: converting the TDM data of a physical layer transmitted by a local user into the data of a link layer, judging the formats of the data of the link layer, and performing corresponding pre-processing on the data of the link layer in different formats; performing PW encapsulation on the pre-processed data in different formats, adding a PW label, and then transmitting the obtained data packet to the opposite PE;
removing the outer PW label of the PW data packet transmitted by the opposite PE, then judging the formats of the data in the PW data packet, and performing corresponding de-encapsulation on the PW data packet according to different data formats; and converting the data in different formats obtained by the de-encapsulation into corresponding data of the link layer, and then converting the data of the link layer into the TDM data of the physical layer and transmitting the TDM data of the physical layer to the local user.

The present invention will be further described below in conjunction with the drawings and embodiments in detail.

Fig. 2 is a flow chart of forwarding uplink data in a method for realizing TDM data transmission of the present invention. As shown in Fig. 2, the flow is specifically as follows.

Step 201: the TDM data of a physical layer transmitted by a local user are converted into the data of a link layer.

The step is specifically as follows: after the local PE receives the TDM data of the physical layer transmitted by the local user, frame alignment, frame extraction, code shape conversion, cell processing, clock extraction, channel mapping, framing de-encapsulation, monitoring and warning of the physical layer, and other operations are performed to obtain the data of the link layer. In the above, the specific process of the every operation performed above is the related art, thereby needing no further description.

Step 202: the formats of the data of the link layer are judged and corresponding pre-processing is performed on the data of the link layer in different formats.

The step is specifically as follows: the formats of the data of the link layer are determined according to the packet header of the data packet of the link layer obtained by the conversion, if the data of the link layer are ordinary TDM data, that is to say, the data of the link layer do not contain the TDM data of other information, no pre-processing is needed; if the data of the link layer are the Packet over SONET/SDH (POS) -based Point-to-Point Protocol (PPP)/ High level Data Link Control(HDLC) data, the HDLC frame format of the data is removed to obtain the PPP message; if the data of the link layer are the Asynchronous Transfer Mode (ATM) cell based on Inverse Multiplexing for ATM (IMA), the processing of the Transmission Convergence (TC) layer is performed on the ATM cell, so as to realize the functions of cell header verification, payload scrambling etc. and obtain the corresponding data.

Step 203: PW encapsulation is performed on the pre-processed data in different formats, a PW label is added, and then the obtained data packet is transmitted to the opposite PE.

The step is specifically as follows: the PW encapsulation is performed on the pre-processed data in different formats, the PW label is added to the encapsulated PW data packet, and then the obtained data packet is transmitted to the opposite PE through the PW.

In the above, if the data are ordinary TDM data, the TDM data are directly encapsulated by using a Circuit Emulation Service over Packet Switched Network (CESoPSN) encapsulation method or a Structure-Agnostic TDM over Packet (SAToP) encapsulation method. If the data are the PPP message, there are two encapsulation methods: one method is intercepting the PPP message, taking out the IP packet in the PPP message, and performing PW encapsulation on the IP packet; and the other method is directly performing PW encapsulation on the PPP message. If the data are converted from the ATM cell, cell cascading and Virtual Circuit (VC) translation are performed on the data, and then the PW encapsulation is performed.

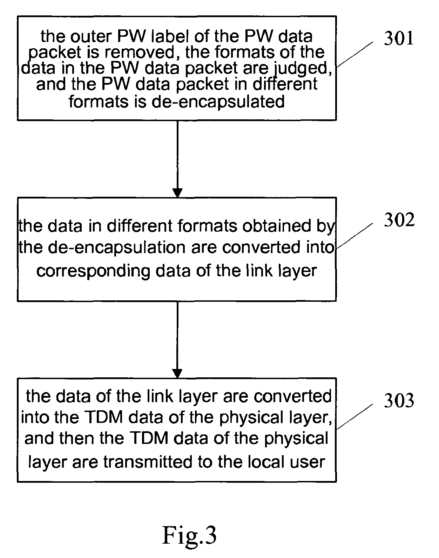

Fig. 3 is a flow chart of forwarding downlink data in a method for realizing TDM data transmitssion of the present invention. As shown in Fig. 3, the flow is specifically as follows.

Step 301: the outer PW label of the PW data packet transmitted by an opposite PE is removed, then the formats of the data in the PW data packet are judged, and corresponding de-encapsulation is performed on the PW data packet according to different data formats.

The step is specifically as follows: the outer PW label of the PW data packet transmitted by the opposite PE is removed by the local PE to obtain the PW data packet, then the formats of the data in the PW data packet are judged according to the packet header of the PW data packet, and the TDM data packet in different formats is de-encapsulated into data in different formats, such as, ordinary TDM data, data in a PPP message format, or data corresponding to the IMA.

Step 302: the data in different formats obtained by the de-encapsulation are converted into corresponding data of the link layer.

The step is specifically as follows: if the data obtained by the de-encapsulation are the ordinary TDM data, it is unnecessary to perform conversion on the TDM data, namely, the data have been the data of the link layer. If the data obtained by the de-encapsulation are the PPP message, it is necessary to add an HDLC frame format to the PPP message, and encapsulate the PPP message into a PPP/HDLC data packet to obtain the data of the link layer. If the data obtained by the de-encapsulation are the data corresponding to the IMA, the processing of the TC layer is performed on the data to obtain the corresponding data of the link layer.

Step 303: the data of the link layer are converted into the TDM data of the physical layer, and then the TDM data of the physical layer are transmitted to the local user.

The step is specifically as follows: code shape conversion, framing encapsulation and other operations are performed on the data of the link layer obtained by the conversion to obtain the TDM data of the physical layer, and the TDM data of the physical layer are transmitted to the local user.

Herein, generally, it is unnecessary to extract a clock during the downlink process, and the clock extracted during the uplink process is used for the data transmission in the uplink and downlink process.

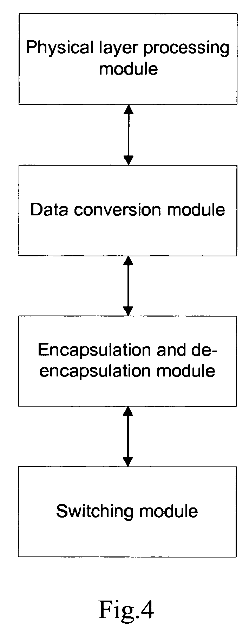

Fig. 4 is a schematic structural diagram of an apparatus for realizing TDM data transmission of the present invention, As shown in Fig.4, the apparatus comprises: a physical layer processing module, a data conversion module, an encapsulation and de-encapsulation module and a switching module, wherein
the physical layer processing module is configured to convert the TDM data of a physical layer transmitted by a local user into the data of a link layer, and transmit the data of the link layer to the data conversion module during an uplink process; and convert the data of the link layer transmitted by the data conversion module into the TDM data of the physical layer, and transmit the TDM data of the physical layer to a local user during the downlink process;
the data conversion module is configured to judge the formats of the data of the link layer transmitted by the physical layer processing module, perform corresponding pre-processing on the data of the link layer in different formats, and transmit the obtained data to the encapsulation and de-encapsulation module during the uplink process; and convert the de-encapsulated data in different formats transmitted by the encapsulation and de-encapsulation module into corresponding data of the link layer, and transmit the data of the link layer to the physical layer processing module during the downlink process;
the encapsulation and de-encapsulation module is configured to perform PW encapsulation on the pre-processed data in different formats transmitted by the data conversion module, and transmit a PW data packet to the switching module during the uplink process; and judge the formats of the data in the PW data packet transmitted by the switching module, perform corresponding de-encapsulation on the PW data packet according to different data formats, and transmit the data obtained by the de-encapsulation to the data conversion module during the downlink process; and
the switching module is configured to add a PW label to the PW data packet transmitted by the encapsulation and de-encapsulation module, and transmit the obtained PW data packet to an opposite PE during the uplink process; and remove the outer PW label of the PW data packet transmitted by the opposite PE, and transmit the data packet whose PW label has been removed to the encapsulation and de-encapsulation module during the downlink process.

The above are only preferred embodiments of the present invention and not used for limiting the scope of the present invention. Any modifications, equivalent replacements, improvements and the like within the principle of the present invention shall fall within the scope of the present invention as defined by the appended claims.

## Claims

1. A method for realizing Time Division Multiplexing (TDM) data transmission, **characterized by** comprising:
converting TDM data of a physical layer transmitted by a local user into data of a link layer, judging formats of the data of the link layer, and performing corresponding pre-processing on the data of the link layer in different formats; performing Pseudo Wire (PW) encapsulation on pre-processed data in different formats, adding a PW label, and then transmitting an obtained data packet to an opposite Provider Edge (PE); and
removing an outer PW label of a PW data packet transmitted by the opposite PE, then judging formats of data in the PW data packet, and performing corresponding de-encapsulation on the PW data packet according to different data formats; and converting the data in different formats obtained by the de-encapsulation into corresponding data of the link layer, then converting the data of the link layer into the TDM data of the physical layer and transmitting the TDM data of the physical layer to the local user.

2. The method for realizing TDM data transmission according to Claim 1, **characterized in that** the formats of the data of the link layer obtained by the conversion comprise: ordinary TDM data, Packet over SONET/SDH (POS)-based Point-to-Point Protocol (PPP)/High Level Data Link Control (HDLC) data or an Asynchronous Transmission Mode (ATM) cell based on Inverse Multiplexing for ATM (IMA).

3. The method for realizing TDM data transmission according to Claim 2, **characterized in that** when the data of the link layer obtained by the conversion is the POS-based PPP/HDLC data,
the step of performing the corresponding pre-processing on the data of the link layer in different formats correspondingly comprises: removing a HDLC frame format of the data to obtain a PPP message.

4. The method for realizing TDM data transmission according to Claim 2, **characterized in that** when the data of the link layer obtained by the conversion is the ATM cell based on IMA,
the step of performing the corresponding pre-processing on the data of the link layer in different formats correspondingly comprises: performing processing of a Transmission Convergence (TC) layer of the ATM cell to realize functions of cell header verification, payload scrambling.

5. The method for realizing TDM data transmission according to Claim 3, **characterized in that** the step of performing the PW encapsulation on the pre-processed data in different formats comprises:
intercepting the PPP message, taking out an Internal Protocol (IP) packet in the PPP message, and performing the PW encapsulation on the IP packet; or, directly performing the PW encapsulation on the PPP message.

6. The method for realizing TDM data transmission according to Claim 4, **characterized in that** the step of performing the PW encapsulation on the pre-processed data in different formats comprises:
performing cell cascading and Virtual Circuit (VC) translation on the pre-processed data, and then performing the PW encapsulation.

7. The method for realizing TDM data transmission according to Claim 2, **characterized in that** when the data of the link layer obtained by the conversion is the ordinary TDM data,
the step of performing the corresponding pre-processing on the data of the link layer in different formats and then performing the PW encapsulation on the pre-processed data in different formats correspondingly comprises: directly performing the PW encapsulation on the TDM data.

8. An apparatus for realizing TDM data transmission, **characterized by** comprising: a physical layer processing module, a data conversion module, an encapsulation and de-encapsulation module, and a switching module, wherein
the physical layer processing module is configured to convert TDM data of a physical layer transmitted by a local user into data of a link layer, and transmit the data of the link layer to the data conversion module during an uplink process, and
the physical layer processing module is further configured to convert the data of the link layer transmitted by the data conversion module into the TDM data of the physical layer, and transmit the TDM data of the physical layer to the local user during a downlink process;
the data conversion module is configured to judge formats of the data of the link layer transmitted by the physical layer processing module, perform corresponding pre-processing on the data of the link layer in different formats, and transmit obtained data to the encapsulation and de-encapsulation module during the uplink process, and
the data conversion module is further configured to convert the data in different formats obtained by the de-encapsulation transmitted by the encapsulation and de-encapsulation module into corresponding data of the link layer, and transmit the data of the link layer to the physical layer processing module during the downlink process;
the encapsulation and de-encapsulation module is configured to perform PW encapsulation on pre-processed data in different formats transmitted by the data conversion module, and transmit a PW data packet to the switching module during the uplink process, and
the encapsulation and de-encapsulation module is further configured to judge formats of data in a PW data packet transmitted by the switching module, perform corresponding de-encapsulation on the PW data packet according to different data formats, and transmit the data obtained by the de-encapsulation to the data conversion module during the downlink process; and
the switching module is configured to add a PW label to the PW data packet transmitted by the encapsulation and de-encapsulation module, and transmit obtained PW data packet to an opposite PE during the uplink process, and
the switching module is further configured to remove an outer PW label of a PW data packet transmitted by the opposite PE, and transmit the data packet whose PW label has been removed to the encapsulation and de-encapsulation module during the downlink process.

9. The apparatus for realizing TDM data transmission according to Claim 8, **characterized in that** the formats of the data of the link layer obtained by the conversion comprise: ordinary TDM data, POS-based PPP/HDLC data or an ATM cell based on IMA.

## Patentansprüche

1. Verfahren zum Durchführen einer Zeitmultiplex (TDM)-Datenübertragung, **dadurch gekennzeichnet, dass** es umfasst:
Umwandeln von TDM-Daten einer physischen Ebene, welche von einem lokalen Benutzer übertragen werden, in Daten einer Verbindungsebene, Bewerten von Formaten der Daten der Verbindungsebene und Durchführen einer entsprechenden Vor-Verarbeitung auf die Daten der Verbindungsebene in verschiedenen Formaten; Durchführen einer Pseudowire (PW)-Verkapselung auf vor-verarbeitete Daten in verschiedenen Formaten, Hinzufügen eines PW-Labels, und dann Übertragen eines erhaltenen Datenpakets zu einem entgegengesetzten Provider Edge (PE); und
Entfernen eines äußeren PW-Labels eines PW-Datenpakets, welches von dem entgegengesetzten PE übertragen wird, dann Bewerten von Formaten von Daten in dem PW-Datenpaket und Durchführen einer entsprechenden Entkapselung auf das PW-Datenpaket gemäß verschiedener Datenformate; und Umwandeln der Daten in verschiedene Formate, welche durch die Entkapselung erhalten werden, in entsprechende Daten der Verbindungsebene, dann Umwandeln der Daten der Verbindungsebene in die TDM-Daten der physischen Ebene und Übertragen der TDM-Daten der physischen Ebene zu dem lokalen Benutzer.

2. Verfahren zum Durchführen einer TDM-Datenübertragung nach Anspruch 1, **dadurch gekennzeichnet, dass** die Formate der Daten der Verbindungsebene, welche durch die Umwandlung erhalten werden, umfassen: gewöhnliche TDM-Daten, Packet over SONET/SDH (POS)-basierte Point-to-Point Protocol (PPP)/High Level Data Link Control (HDLC)-Daten oder eine Asynchronous Transmission Mode (ATM)-Zelle auf Grundlage von Inverse Multiplexing for ATM (IMA).

3. Verfahren zum Durchführen einer TDM-Datenübertragung nach Anspruch 2, **dadurch gekennzeichnet, dass** wenn die Daten der Verbindungsebene, welche durch die Umwandlung erhalten werden, die POS-basierten PPP/HDLC-Daten sind,
der Schritt des Durchführens der entsprechenden Vor-Verarbeitung auf die Daten der Verbindungsebene in verschiedenen Formaten entsprechend umfasst: Entfernen eines HDLC-Frameformats der Daten, um eine PPP-Nachricht zu erhalten.

4. Verfahren zum Durchführen einer TDM-Datenübertragung nach Anspruch 2, **dadurch gekennzeichnet, dass** wenn die Daten der Verbindungsebene, welche durch die Umwandlung erhalten werden, die ATM-Zelle auf Grundlage von IMA sind,
der Schritt des Durchführens der entsprechenden Vor-Verarbeitung auf die Daten der Verbindungsebene in verschiedenen Formaten entsprechend umfasst: Durchführen einer Verarbeitung einer Transmission Convergence (TC)-Ebene der ATM-Zelle, um Funktionen von Zellenheader-Verifikation, Payload-Scrambling auszuführen.

5. Verfahren zum Durchführen einer TDM-Datenübertragung nach Anspruch 3, **dadurch gekennzeichnet, dass** der Schritt des Durchführens der PW-Verkapselung auf die vor-verarbeiteten Daten in verschiedenen Formaten umfasst:
Abfangen der PPP-Nachricht, Herausnehmen eines Internet Protocol (IP)-Pakets in der PPP-Nachricht und Durchführen der PW-Verkapselung auf das IP-Paket; oder direktes Ausführen der PW-Verkapselung auf die PPP-Nachricht.

6. Verfahren zum Durchführen einer TDM-Datenübertragung nach Anspruch 4, **dadurch gekennzeichnet, dass** der Schritt des Durchführens der PW-Verkapselung auf die vor-verarbeiteten Daten in verschiedenen Formaten umfasst:
Durchführen eines Zellen-Kaskadierens und Virtual Circuit (VC)-Übersetzung auf die vor-verarbeiteten Daten und dann Durchführen der PW-Verkapselung.

7. Verfahren zum Durchführen einer TDM-Datenübertragung nach Anspruch 2, **dadurch gekennzeichnet, dass** wenn die Daten der Verbindungsebene, welche durch die Umwandlung erhalten werden, die gewöhnlichen TDM-Daten sind,
der Schritt des Durchführens der entsprechenden Vor-Verarbeitung auf die Daten der Verbindungsebene in verschiedenen Formaten und dann Durchführen der PW-Verkapselung auf die vor-verarbeiteten Daten in verschiedenen Formaten entsprechend umfasst: direktes Durchführen der PW-Verkapselung auf die TDM-Daten.

8. Vorrichtung zum Durchführen einer TDM-Datenübertragung, **dadurch gekennzeichnet, dass** sie umfasst: ein Verarbeitungsmodul für eine physische Ebene, ein Daten-Umwandlungsmodul, ein Verkapselungs- und Entkapselungsmodul und ein Schaltmodul, wobei das Verarbeitungsmodul für eine physische Ebene dazu eingerichtet ist, TDM-Daten einer physischen Ebene, welche von einem lokalen Benutzer übertragen werden, in Daten einer Verbindungsebene umzuwandeln, und die Daten der Verbindungsebene während eines Uplink-Prozesses zu dem Daten-Umwandlungsmodul zu übertragen, und
das Verarbeitungsmodul für eine physische Ebene ferner dazu eingerichtet ist, die Daten der Verbindungsebene, welche von dem Daten-Umwandlungsmodul übertragen werden, in die TDM-Daten der physischen Ebene umzuwandeln, und die TDM-Daten der physischen Ebene während eines Downlink-Prozesses zu dem lokalen Benutzer zu übertragen;
wobei das Daten-Umwandlungsmodul dazu eingerichtet ist, Formate der Daten der Verbindungsebene, welche von dem Verarbeitungsmodul für eine physische Ebene übertragen werden, zu bewerten, eine entsprechende Vor-Verarbeitung auf die Daten der Verbindungsebene in verschiedenen Formaten durchzuführen und erhaltene Daten während des Uplink-Prozesses zu dem Verkapselungs- und Entkapselungsmodul zu übertragen, und
das Daten-Umwandlungsmodul ferner dazu eingerichtet ist, die Daten in verschiedenen Formaten, welche durch die Entkapselung erhalten werden, welche von dem Verkapselungs- und Entkapselungsmodul übertragen werden, in entsprechende Daten der Verbindungsebene umzuwandeln und die Daten der Verbindungsebene während des Downlink-Prozesses zu dem Verarbeitungsmodul für eine physische Ebene zu übertragen;
wobei das Verkapselungs- und Entkapselungsmodul dazu eingerichtet ist, eine PW-Verkapselung auf vor-verarbeitete Daten in verschiedenen Formaten durchzuführen, welche von dem Daten-Umwandlungsmodul übertragen werden, und ein PW-Datenpaket während des Uplink-Prozesses zu dem Schaltmodul zu übertragen, und
das Verkapselungs- und Entkapselungsmodul ferner dazu eingerichtet ist, Formate von Daten in einem PW-Datenpaket zu bewerten, welches von dem Schaltmodul übertragen wird, eine entsprechende Entkapselung auf das PW-Datenpaket gemäß verschiedenen Datenformaten durchzuführen und die Daten, welche durch die Entkapselung erhalten werden, während des Downlink-Prozesses zu dem Daten-Umwandlungsmodul zu übertragen; und
das Schaltmodul dazu eingerichtet ist, ein PW-Label zu dem PW-Datenpaket hinzuzufügen, welches von dem Verkapselungs- und Entkapselungsmodul übertragen wird, und erhaltenes PW-Datenpaket während des Uplink-Prozesses zu einem entgegengesetzten PE zu übertragen, und
das Schaltmodul ferner dazu eingerichtet ist, ein äußeres PW-Label eines PW-Datenpakets, welches von dem entgegengesetzten PE übertragen wird, zu entfernen, und das Datenpaket, dessen PW-Label entfernt worden ist, während des Downlink-Prozesses zu dem Verkapselungs- und Entkapselungsmodul zu übertragen.

9. Vorrichtung zum Durchführen einer TDM-Datenübertragung nach Anspruch 8, **dadurch gekennzeichnet, dass** die Formate der Daten der Verbindungsebene, welche durch die Umwandlung erhalten werden, umfassen: gewöhnliche TDM-Daten, POS-basierte PPP/HDLC-Daten oder eine ATM-Zelle auf Grundlage von IMA.

## Revendications

1. Procédé pour réaliser une transmission de données avec multiplexage par répartition dans le temps (MRT), **caractérisé en ce qu'**il comprend :
la conversion de données de MRT d'une couche physique transmise par un utilisateur local en données d'une couche de liaison, l'évaluation des formats des données de la couche de liaison et l'exécution d'un prétraitement correspondant des données de la couche de liaison dans différents formats; l'exécution d'une encapsulation en *pseudowire* (PW) des données prétraitées dans différents formats, l'ajout d'un libellé PW puis la transmission d'un paquet de données obtenu vers un côté de fournisseur (PE) opposé, et
le retrait d'un libellé PW extérieur d'un paquet de données PW transmis par le côté de fournisseur (PE) opposé, puis l'évaluation des formats de données dans le paquet de données PW et l'exécution d'une décapsulation correspondante du paquet de données PW selon différents formats de données, et la conversion des données sous différents formats obtenues par la décapsulation en données correspondantes de la couche de liaison, puis la conversion des données de la couche de liaison en données de MRT de la couche physique et la transmission des données de MRT de la couche physique à l'utilisateur local.

2. Procédé pour réaliser une transmission de données en MRT selon la revendication 1, **caractérisé en ce que** les formats des données de la couche de liaison obtenues par la conversion comprennent : des données de MRT ordinaires, des données en base Paquet sur SONET/SDH (POS) en protocole de point à point (PPP)/en protocole contrôle de liaison de données de haut niveau (HDLC) ou une cellule ATM (mode de transmission asynchrone) en base IMA (multiplexage inverse pour ATM).

3. Procédé pour réaliser une transmission de données en MRT selon la revendication 2, **caractérisé en ce que** lorsque les données de la couche de liaison obtenues par la conversion sont des données PPP/HDLC en base POS,
l'étape d'exécution du prétraitement correspondant sur les données de la couche de liaison sous différents formats comprend en conséquence la suppression d'un format de trame HDLC afin d'obtenir un message en PPP.

4. Procédé pour réaliser une transmission de données en MRT selon la revendication 2, **caractérisé en ce que** lorsque les données de la couche de liaison obtenues par la conversion sont la cellule ATM en base IMA,
l'étape d'exécution du prétraitement correspondant sur les données de la couche de liaison sous différents formats comprend en conséquence l'exécution du traitement d'une couche de convergence de transmission (TC) de la cellule ATM afin de réaliser les fonctions de vérification de l'en-tête de cellule et de brouillage du contenu utile.

5. Procédé pour réaliser une transmission de données en MRT selon la revendication 3, **caractérisé en ce que** l'étape d'exécution de l'encapsulation PW des données prétraitées sous différents formats comprend :
l'interception du message en PPP, l'extraction d'un paquet de protocole interne (IP) dans le message en PPP et l'exécution de l'encapsulation PW sur le paquet IP ou l'exécution directe de l'encapsulation PW sur le message en PPP.

6. Procédé pour réaliser une transmission de données en MRT selon la revendication 4, **caractérisé en ce que** l'étape d'exécution de l'encapsulation PW sur les données prétraitées sous différents formats comprend :
l'exécution de la mise en cascade des cellules et de la translation du circuit virtuel (VC) sur les données prétraitées, puis l'exécution de l'encapsulation PW.

7. Procédé pour réaliser une transmission de données en MRT selon la revendication 2, **caractérisé en ce que** lorsque les données de la couche de liaison obtenues par la conversion sont les données MRT ordinaires, l'étape d'exécution du prétraitement correspondant sur les données de la couche de liaison sous différents formats puis l'exécution de l'encapsulation PW sur les données prétraitées sous différents formats comprennent en conséquence l'exécution directe de l'encapsulation PW sur les données de MRT.

8. Appareil pour la réalisation d'une transmission de données en MRT, **caractérisé en ce qu'**il comprend : un module de traitement de couche physique, un module de conversion de données, un module d'encapsulation et de décapsulation et un module de commutation,
le module de traitement de couche physique étant configuré pour convertir des données de MRT d'une couche physique transmise par un utilisateur local en données d'une couche de liaison et transmettre les données de la couche de liaison au module de conversion de données pendant un processus de connexion ascendante, et
le module de traitement de couche physique étant configuré en outre pour convertir les données de la couche de liaison transmises par le module de conversion de données en données de MRT de la couche physique et transmettre les données de MRT de la couche physique à l'utilisateur local pendant un processus de liaison descendante ;
le module de conversion de données étant configuré pour évaluer les formats des données de la couche de liaison transmises par le module de traitement de couche physique, exécuter un prétraitement correspondant sur les données de la couche de liaison sous différents formats et transmettre les données obtenues au module d'encapsulation et de décapsulation pendant le processus de liaison ascendante, et
le module de conversion de données étant configuré en outre pour convertir les données sous différents formats obtenues par la décapsulation transmises par le module d'encapsulation et de décapsulation en données de la couche de liaison correspondantes et transmettre les données de la couche de liaison au module de traitement de couche physique pendant le processus de liaison descendante;
le module d'encapsulation et de décapsulation étant configuré pour exécuter une encapsulation PW sur les données prétraitées sous différents formats transmises par le module de conversion de données et transmettre un paquet de données PW au module de commutation pendant le processus de liaison ascendante, et
le module d'encapsulation et de décapsulation étant en outre configuré pour évaluer les formats de données d'un paquet de données PW transmis par le module de commutation, exécuter la décapsulation correspondante sur le paquet de données PW selon différents formats de données et transmettre les données obtenues par la décapsulation au module de conversion de données pendant le processus de liaison descendante; et
le module de commutation étant configuré pour ajouter un libellé PW au paquet de données PW transmis par le module d'encapsulation et de décapsulation et transmettre le paquet de données PW obtenu à un côté de fournisseur (PE) opposé pendant le processus de liaison ascendante, et
le module de commutation étant en outre configuré pour enlever un libellé PW extérieur d'un paquet de données PW transmis par le côté de fournisseur (PE) opposé et transmettre le paquet de données dont le libellé PW a été enlevé au module d'encapsulation et de décapsulation pendant le processus de liaison descendante.

9. Appareil pour la réalisation de la transmission de données en MRT selon la revendication 8, **caractérisé en ce que** les formats des données de la couche de liaison obtenues par la conversion comprennent des données de MRT ordinaires, des données PPP/HDLC en base POS ou une cellule ATM en base IMA.
